# EUROPÄISCHE PATENTSCHRIFT

(11) **EP 1 636 014 B1**
(45) Veröffentlichungstag und Bekanntmachung des Hinweises auf die Patenterteilung: **29.11.2006**
(21) Anmeldenummer: 04729365.9
(22) Anmeldetag: 24.04.2004
(51) Int. Cl.: B29C 47/90

(54) **KOMBIROLLE FÜR ROHREXTRUSIONSANLAGE**
COMBINED ROLL FOR A PIPE EXTRUSION INSTALLATION
ROULEAU COMBINE POUR INSTALLATION D'EXTRUSION DE TUYAUX

(30) Priorität: 28.05.2003 DE 10324187
(43) Veröffentlichungstag der Anmeldung: 22.03.2006
(73) Patentinhaber: Krauss-Maffei Kunststofftechnik GmbH, 80997 München (DE)
(72) Erfinder: ULRICH, Herbert, 48282 Emsdetten (DE)
(74) Vertreter: Harrasz, Julia Konstanze
(86) Internationale Anmeldenummer: PCT/EP2004/004361
(87) Internationale Veröffentlichungsnummer: WO 2004/106034

(56) Entgegenhaltungen:
- AT-B- 400 549
- DE-A- 1 554 876
- DE-A- 19 843 340
- US-A- 3 958 913
- PATENT ABSTRACTS OF JAPAN Bd. 2002, Nr. 02, 2. April 2002 (2002-04-02) -& JP 2001 287258 A (SEKISUI CHEM CO LTD), 16. Oktober 2001 (2001-10-16)

## Beschreibung

Die Erfindung betrifft eine Kombirolle zur Führung eines Rohres in einer Rohrextrusionsanlage sowie eine Rohrextrusionsanlage zur Herstellung von Rohren mit einstellbarem Durchmesser gemäß den Oberbegriffen der Patentansprüche 1 bzw. 7.

Rohrextrusionsanlagen sind allgemein bekannt. Bei der Produktion von Kunststoffrohren wird ein Kunststoffausgangsmaterial zunächst in einem Extruder aufgeschmolzen und über ein Rohrwerkzeug ausgebracht. Der aus dem Rohrwerkzeug austretende, thermoplastische Schmelzeschlauch wird unter Formzwang abgekühlt und kalibriert. Der Kalibrierung kommt in Bezug auf Rohrabmessungen und Spannungen in der Rohrwand eine große Bedeutung zu. Überwiegend werden Kunststoffrohre außen kalibriert, wobei sich heutzutage eine Vakuum-Tankkalibrierung durchgesetzt hat.

Der noch plastische Schmelzeschlauch wird kurz nach dem Austritt aus dem Rohrwerkzeug durch einen im Vakuumtank montierten Kalibrator gezogen. Dieser Kalibrator kann je nach Thermoplastmaterial als Hülsen- oder Scheibenkalibrator ausgeführt sein. Für den nötigen Anpressdruck an den Kalibrator sorgt die Druckdifferenz zwischen dem Normaldruck im Rohrinneren und dem Unterdruck im Vakuumtank. Die Vakuum-Tankkalibrierung besteht aus einem vakuumdicht verschließbaren Behältnis, das vorzugsweise als Kühlbecken mit Sprühdüsen ausgestattet sein kann. In und nachfolgend der Kalibrierstrecke müssen die extrudierten Rohre soweit abgekühlt werden, dass sie für nachfolgende Beanspruchungen (zum Beispiel Abzugsvorrichtung, Wickler) ausreichend formstabil sind. Die Kühlung der Rohre kann dabei in Tanks mit Wasserbädern oder Sprühdüsen erfolgen.

Bei der Herstellung von Kunststoffrohren war es bis vor einiger Zeit notwendig, für unterschiedliche Wanddicken oder Außendurchmesser verschiedene Kalibriereinrichtungen zur Verfügung zu stellen. Dazu mussten die entsprechenden Teile (z.B.

Kalibrator) ausgewechselt werden, was ein Stillsetzen der Maschine erforderte und damit zu Ausfallzeiten führte.

In der DE198 43 340 C2 ist daher vorgeschlagen, eine einstellbare Kalibriereinrichtung für unterschiedliche Rohrdimensionen zu verwenden. Diese Kalibriereinrichtung besteht beispielsweise aus einer Vielzahl von Lamellen, die an der Außenseite des zu kalibrierenden Rohres über den Umfang verteilt und im Abstand zueinander angeordnet sind. In Produktionsrichtung des Rohres gesehen, sind eine Vielzahl solcher Lamellenkränze innerhalb einer Kalibrierstation angeordnet, wobei die einzelnen Lamellen der einzelnen Lamellenkränze auf Lücke zueinander stehen.

Sowohl im Vakuumtank wie auch in den Sprühbädern ist es erforderlich, das Rohr zu führen. Bei den bisher im Markt bekannten Anlagen wird diese Aufgabe durch Rollen und Stützscheiben erledigt. Stützscheiben, welche bei der dem Rohr zugewandten Seite den gewünschten Rohrradius aufweisen, finden in der Regel im Vakuumtank Verwendung. Die Verwendung von solchen Stützscheiben scheint notwendig, da das Rohr in dieser frühen Phase noch sehr instabil ist und ohne diese Führungshilfe zur Ovalität neigen würde.

Nachteilig bei einer Rohrextrusionsanlage, mit der Rohre mit unterschiedlichem Durchmesser hergestellt werden können, ist jedoch, dass bei jedem Durchmesserwechsel auch die Rohrführung geändert werden muss und bisher die Führungen manuell anzupassen oder auszutauschen sind. Da die Zentrumslinie eines Rohres bei verschiedenen Rohren im Wesentlichen unverändert bleibt, müssen bei größeren Rohren die Rollen weiter unten angeordnet werden und bei kleineren Rohrdurchmessern die Rollen angehoben werden.

Aus der DE 196 45 832 C1 ist eine Vorrichtung zum Führen von strangförmigen Bauteilen, insbesondere Rohren, bekannt, bei der an parallelogrammförmig angeordneten Halterungen drehbar gelagerte Rollen verstellt werden können, so dass eine fortwährende zentrische Führung von Rohren mit unterschiedlichen Durchmessern möglich ist.

Aufgabe der vorliegenden Erfindung ist es, eine Kombirolle sowie eine Rohrextrusionsanlage anzugeben, bei der sich die Rohrführung auf einfache Art und Weise automatisch auf die unterschiedlichen Rohrdurchmesser einstellt und das herzustellende Produkt bei möglichst zentrischer Führung gut unterstützt.

Diese Aufgabe wird bei einer Kombirolle durch die im Anspruch 1 angegebenen Merkmale und bei einer Rohrextrusionsanlage durch die im Anspruch 7 angegebenen Merkmale gelöst.

Ein Gedanke der vorliegenden Erfindung ist es, dass bei einer Kombirolle Mittel vorgesehen sind, welche die vertikale Lage der Rolle abhängig von deren Gewichtsbelastung einstellt. Dabei wird bei dieser Ausführungsform der Umstand mit einbezogen, dass Rohre mit größerem Durchmesser in der Regel ein höheres Metergewicht aufweisen. Wird die Rolle dann mit einem größeren Gewicht belastet (was in der Regel einem größeren Durchmesser entspricht), so wird sie etwas nach unten verschoben, nimmt die Gewichtsbelastung einer Rolle ab, so bewegt sie sich in entgegengesetzter Richtung nach oben. Damit kann man auf einfache Weise erreichen, dass die Zentrumslinie des Rohres im wesentlichen auf gleicher vertikaler Höhe bleibt.

Vorzugsweise ist die Achse, an welcher die Rolle gelagert ist, mittelbar oder unmittelbar über ein elastisches Element abgestützt. Als elastisches Element können eine Vielzahl von an sich bekannten Materialien und Vorrichtungen verwendet werden (zum Beispiel gummiartige Elemente). Besonders geeignet haben sich jedoch Federn, insbesondere Spiralfedern, gezeigt.

Insbesondere richten sich die die Führung definierenden Rollen dann besonders gut in Abhängigkeit der Gewichtsbelastung aus, wenn der Elastizitätskoeffizient, insbesondere die Federkonstante oder Federhärte, auf einen mit dem Dimensionsbereich verbundenen Metergewichtsbereich abgestimmt ist.

Für die Rollen können unterschiedliche Rollengeometrien verwendet werden. Beispielsweise können Rollen verwendet werden, die einem maximal möglichen Rohrradius entsprechen. Oder die Rollen können so ausgebildet sein, dass sie auch kleinste herzustellende Rohre seitlich abstützen. Solche Rohre werden vorzugsweise im Bereich des Vakuumtanks angeordnet. In den nachfolgenden Sprühbädern können Rollengeometrien verwendet werden, die in Form eines Doppelprismas ausgeführt sind, so dass auch hier das Rohr immer an den beiden hinteren Seiten geführt wird.

Bei einer Rohrextrusionsanlage sind zumindest einige Kombirollen zur Bildung der Führung in Abzugsrichtung hintereinander angeordnet. Dabei können die Rollen mit unterschiedlicher Geometrie ausgewählt sein. Die unterschiedlichen Rollengeometrien können dabei verschiedene Stützfunktionen haben und unterschiedliche Stützungslinien aufbauen, beispielsweise eine Unterstützung des Rohres im Bodenbereich und in verschiedenen Seitenbereichen.

Natürlich sind auch andere Mittel vorstellbar, die zur Einstellung der Rollen in ihrer vertikalen Höhe geeignet sind. Beispielsweise kann der Rohrdurchmesser mittels eines Sensors (z.B. Laser, mech. Sensor, etc.) abgetastet und ein Antrieb für die Rollen (entweder ein Antrieb pro Rolle oder ein Antrieb für jeweils mehrere Rollen) vorgesehen sein, mit dem die Rollen - abhängig vom abgetasteten Durchmesser dann - automatisch eingestellt werden. Als Antriebe eignen sich elektrische, hydraulische oder pneumatische Antriebe. Allerdings ist ein solches Regelsystem im Gegensatz zu dem vorbeschriebenen Einstellsystem mittels einer Feder signifikant aufwendiger, da ein Sensor, ein Aktuator und eine Steuerung benötigt werden. Daher kommt eine solchermaßen ausgestaltete Vorrichtung insbesondere dann in Betracht, wenn eine hohe Präzision erforderlich ist.

Nachfolgend wird die Erfindung anhand von Ausführungsbeispielen näher erläutert. Dabei zeigen die Zeichnungen in
- Figur 1: eine schematische Darstellung einer kompletten Rohrextrusionsanlage,
- Figur 2: eine schematische Draufsicht einer erfindungsgemäßen Kombirolle,
- Figur 3: eine schematische Seitenansicht der Kombirolle aus Figur 2,
- Figur 4: einen Teilausschnitt aus einer Rohrextrusionsanlage in perspektivischer Ansicht mit einer weiteren Ausführungsform einer Kombirolle, und
- Figur 5: eine weitere Ausführungsform einer Kombirolle in schematischer perspektivischer Ansicht mit Rollen unterschiedlichen Durchmessers.

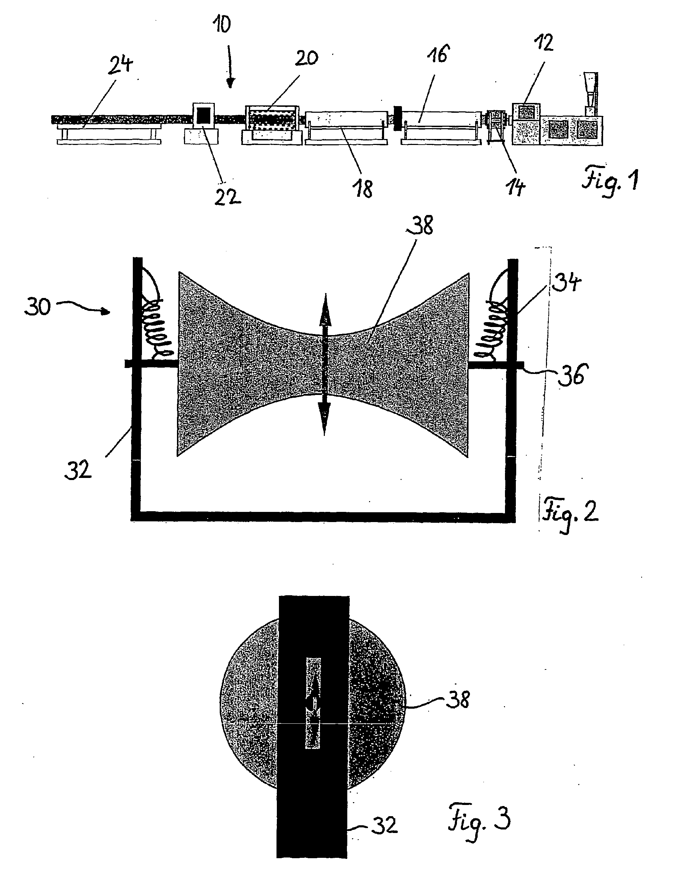

In Figur 1 ist eine Rohrextrusionsanlage 10 schematisch dargestellt. Am Anfang der Rohrextrusionsanlage 10 befindet sich ein Extruder 12, in den das Rohrausgangsmaterial eingefüllt, aufgeschmolzen und am Ende abgegeben wird. Die im Extruder 12 erzeugte Schmelze durchläuft anschließend ein Rohrwerkzeug 14, in dem es in die erforderliche Rohrform gebracht wird. Dabei ist das Rohrwerkzeug vorliegend ein veränderliches Rohrwerkzeug, so dass der Rohraustrittsspalt entsprechend den Durchmesser- und Wanddickenanforderungen einstellbar ist. Aus dem Rohrwerkzeug 14 tritt ein thermoplastischer Schmelzeschlauch aus, der anschließend in eine Vakuum-Tankkalibrierung 16 eingeführt wird. Die Vakuum-Tankkalibrierung 16 besteht aus einem vakuumdicht verschließbaren Kühlbecken, in dem - nicht näher dargestellte - Sprühdüsen zur Kühlung des Schmelzeschlauches vorgesehen sind. In der Vakuum-Tankkalibrierung 16 ist ein ebenfalls nicht näher dargestellter Kalibrierkorb zur endgültigen Formgebung des Schmelzeschlauches vorgesehen. Dabei wird der Schmelzeschlauch aufgrund einer Druckdifferenz zwischen dem Normaldruck im Rohrinneren und dem Unterdruck im Vakuumtank an einen Scheibenkalibrator angedrückt. Der Scheibenkalibrator weist eine ebenfalls veränderliche Rohrgeometrie auf, die entsprechend den eingestellten Anforderungen an den Durchmesser eingestellt wird.

Nach der Vakuum-Tankkalibrierung 16, in der bereits eine erste Abkühlung erfolgt, durchläuft der Rohrschlauch eine weitere Kühleinrichtung 18, in der ebenfalls mittels Wasserbädern oder Sprühdüsen gekühlt wird. In dieser Kühleinrichtung 18 wird das Rohr soweit abgekühlt, dass es für nachfolgende Beanspruchungen formstabil ist.

Nach der Kühleinrichtung folgt eine Abzugseinrichtung 20, welche den Schmelzeschlauch kontinuierlich und druckfrei sowie mit gleichmäßiger Geschwindigkeit durch die Kalibrierung und die Kühltanks zieht. Die Abzugskraft der Anlage muss dabei größer sein als die auftretenden Reibungskräfte. Eine gängige Art eines Abzugs sind Raupenabzüge.

Nach der Abzugseinrichtung 20 erfolgt eine Zerteilung des Schlauches in einer Trenneinrichtung 22, so dass Rohre gleicher Länge herstellbar sind, die dann auf einem Ablagetisch 24 abgelegt und von dort einer Lagerstätte zugeführt werden.

Sowohl in der Vakuum-Tankkalibrierung 16 wie auch in der Kühleinrichtung 18 ist es erforderlich, das Rohr zu führen. Dies wird vorliegend mittels der erfindungsgemäßen Kombirollen erreicht, welche nachfolgend beschrieben werden.

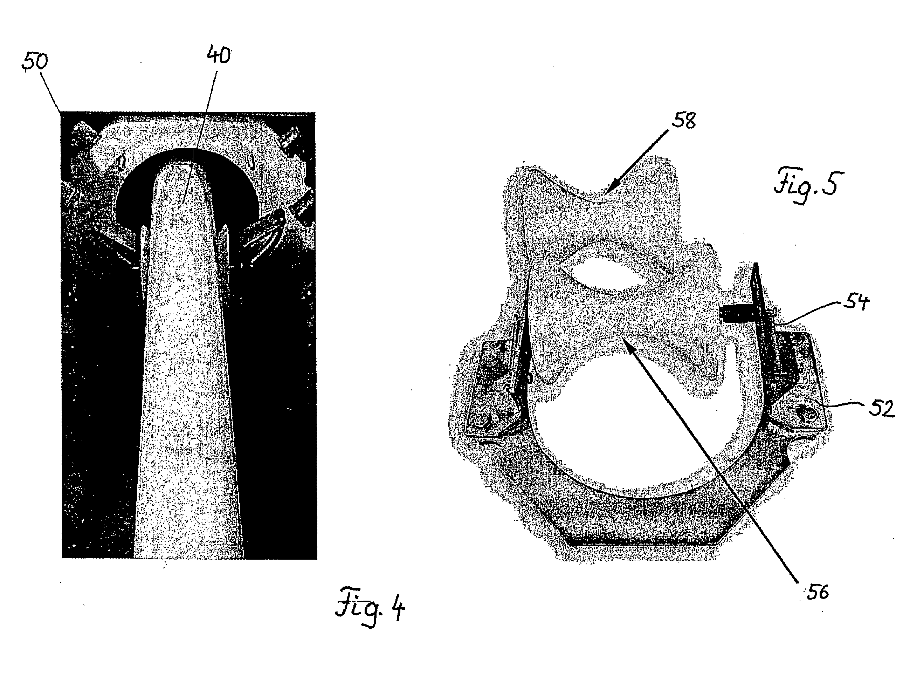

Eine erste Ausführungsform einer Kombirolle 30 ist in den Figuren 2 und 3 zu erkennen. Diese Kombirolle 30 ist besonders einfach aufgebaut und umfasst eine im Wesentlichen U-förmig Halterung 32 aus einem zweifach geknickten Blechstab. In den beiden Seitenabschnitten der U-förmigen Halterung 32 sind fluchtend zwei Langlöcher angeordnet, in denen eine Achse 36 der Kombirolle 30 nach oben und unten verschiebbar (vgl. Figur 3) gehalten ist.

Auf der Achse 36 ist eine Rolle 38 drehbar gelagert, wobei deren Oberfläche eine Geometrie aufweist, wie sie zur Unterstützung des Rohres erforderlich ist.

An den beiden oberen Enden der Halterung 32 ist jeweils ein Ende einer Spiralfeder 34 befestigt, dessen anderes Ende mit der Achse 36 in Eingriff steht. Die Federn 34 halten die Achse 36 und damit die Rolle 38 in einer durch die Federkraft definierten im wesentlichen horizontalen Position.

Je nach Belastung der Rolle 38 dehnen sich nun die beiden Federn 34, so dass sich die Achse 36 und damit die Rolle 38 in Abhängigkeit von der Gewichtsbelastung nach unten bewegt.

Wird die Federhärte bzw. die Federkonstante so gewählt, dass der mit dem Dimensionsbereich gekoppelte Metergewichtsbereich in geeigneter Weise berücksichtigt ist, so bewegt sich die Rolle 38 je nach darauf liegendem Rohr derart nach unten, dass die Zentrallinie des Rohres im Wesentlichen auf gleicher Höhe bleibt.

Auf diese Weise erreicht man sehr kostengünstig und mit einfachen Mitteln eine automatische Einstellung der Rohrführung auf die verschiedenen gewählten Durchmesser eines herzustellenden Rohres. Natürlich kann eine Anpassung an ein Metergewicht auch dadurch erfolgen, dass die Federn 34 ausgetauscht oder zusätzliche elastische Vorrichtungen (beispielsweise weitere Federn) hinzugenommen werden.

Es ist besonders darauf hinzuweisen, dass die vorliegende Erfindung nicht auf die Ausführungsform mit den gezeigten Spiralfedern 34 beschränkt ist. Als Alternative zu den Spiralfedern können auch andere elastische Elemente, wie zum Beispiel Blattfedern, Gummiabfederungen etc. verwendet werden, die eine Bewegung der Achse in dem Langloch nach unten entsprechend der Gewichtsbelastung der Rolle 38 ermöglichen.

In Figur 4 ist ein Teil einer Rohrextrusionsanlage dargestellt, wobei die Kühleinrichtung 18 in geöffnetem Zustand zu erkennen ist. Gleich nach dem Eingang der Kühleinrichtung 18 ist eine zweite Ausführungsform einer Kombirolle mit einer Halterung 50 angeordnet, die wiederum zur Abstützung der Achse für die Rolle auf zwei Spiralfedern zurückgreift.

Eine weitere Ausführungsform einer Kombirolle mit Halterung 52 und Federn 54 ist in Figur 5 dargestellt. Dabei ist eine erste Rolle 56 an einer Achse gelagert. Die Rolle 56 ist bezüglich ihrer Oberflächengestaltung so ausgeführt, dass ein maximal möglicher Rohrradius an seiner unteren Seite darauf abgestützt werden kann. Insgesamt ist die Krümmung der Rolle 46 parallel zur Achsrichtung entsprechend dem größten Rohrradius eines zu extrudierenden Rohres gewählt.

Im Gegensatz dazu besitzt die als Ersatzrolle dargestellte Rolle 58 in Figur 5 eine andere Oberflächengeometrie, nämlich eine Geometrie, mit der auch kleinste Rohre noch seitlich abgestützt werden können. Damit liegt das zu extrudierende Rohr 40 gegenüber der Rolle 56 mit anderen Auflagepunkten auf der Rolle 58.

Bei einer erfindungsgemäßen Rohrextrusionsanlage können nun eine Reihe von Kombirollen zur Ausbildung der Rohrführung in Reihe hintereinander angeordnet werden. Dabei ist es möglich, alternierend Rollen mit unterschiedlicher Oberflächengeometrie zu verwenden, so dass das zu extrudierende Rohr an verschiedenen Linienpunkten abgestützt werden kann. Dadurch kann eine Verformung des an sich noch relativ instabilen Schmelzeschlauches bedingt durch dessen Instabilität - insbesondere im Bereich der Vakuum-Tankkalibrierung 16 - vermieden werden. Es ist nicht mehr notwendig, Stützscheiben bei einem Durchmesserwechsel ebenfalls auszutauschen und durch andere Rollen oder Stützscheibeneinrichtungen zu ersetzen. Die Stützscheibenfunktion wird vorliegend durch die abwechselnde Verwendung von Rollen mit unterschiedlicher Oberflächengeometrie erfüllt, da unterschiedliche Rohrbereiche abgestützt werden.

Insgesamt ist mit der vorliegenden Erfindung sichergestellt, dass sich die Führung in ihrer Lage automatisch dem produzierten Rohrdurchmesser anpasst. So dass keinerlei manuelle Justier- oder Austauschfunktionen mehr notwendig sind. Natürlich sind auch sehr viel komplexere und aufwendigere absenkbare und anhebbare Führungen möglich, die in den Bereich der vorliegenden Erfindung fallen. Beispielsweise kann der Durchmesser oder das Gewicht eines Rohres über einen Sensor ermittelt und die Achse einer Rolle 36 mit einem Antriebsmittel in ihrer Höhe entsprechend dem Gewicht der Achse eingestellt werden. Vorstellbar sind dabei elektromotorische oder hydraulische Antriebe zur Einstellung der Achse 36. Ein solcher - ebenfalls unter die Erfindung fallender Gegenstand würde jedoch gegenüber der in dem Ausführungsbeispiel gezeigten Ausführungsform kostenintensiver sein.

### Bezugszeichenliste

- 10: Rohrextrusionsanlage
- 12: Extruder
- 14: Werkzeug
- 16: Kalibriereinrichtung
- 18: Kühleinrichtung
- 20: Abzugseinrichtung
- 22: Trenneinrichtung
- 24: Ablagetisch
- 30: Kombirolle
- 32: Halterung
- 34: Spiralfeder
- 36: Rollenachse
- 38: Rolle
- 40: Rohr
- 50: Zweite Ausführungsform einer Halterung für eine Rolle
- 52: Dritte Ausführungsform einer Halterung für eine Rolle
- 54: Feder
- 56: Rolle mit einer ersten Geometrie
- 58: Rolle mit einer zweiten Geometrie

## Patentansprüche

1. Kombirolle zur Führung eines Rohres in einer Rohrextrusionsanlage (10) zur Herstellung von Rohren (40) mit einstellbarem Durchmesser, umfassend eine in einer Halterung (32, 50, 52 ) gelagerten Rolle (38, 56, 58),
**dadurch gekennzeichnet, dass**
Mittel (34, 54) vorgesehen sind, welche die Positionierung der Rolle (38, 56, 58) in ihrer vertikalen Lage automatisch und abhängig von der Gewichtsbelastung der Rollen (38, 56, 58) durchführen.

2. Kombirolle nach Anspruch 1,
**dadurch gekennzeichnet,**
**dass** die Rolle (38, 56, 58) an einer Achse (36) gelagert ist, welche mittels einem elastischen Element (34, 54) derart beweglich abgestützt ist, dass sich die Rolle (38, 56, 58) bei zunehmender Belastung nach unten bewegt.

3. Kombirolle nach Anspruch 2,
**dadurch gekennzeichnet,**
**dass** als elastisches Element eine Feder (34, 54), insbesondere eine Spiralfeder, vorgesehen ist.

4. Kombirolle nach Anspruch 3,
**dadurch gekennzeichnet,**
**dass** die Federhärte auf den mit dem Dimensionsbereich verbundenen Metergewichtsbereich des Rohres abgestimmt ist.

5. Kombirolle nach einem der vorhergehenden Ansprüche,
**dadurch gekennzeichnet,**
**dass** bei mehreren hintereinander angeordneten Rollen unterschiedliche Rollengeometrien verwendet sind.

6. Kombirolle nach Anspruch 5,
**dadurch gekennzeichnet,**
**dass** die Rollengeometrie zur Stützung des Rohres einem maximal möglichen Rohrradius entspricht oder so ausgebildet ist, dass auch das kleinste herzustellende Rohr seitlich abgestützt ist oder in Form eines Doppelprismas ausgebildet ist.

7. Rohrextrusionsanlage zur Herstellung von Rohren mit einstellbarem Durchmesser umfassend einen Extruder, eine einstellbare Kalibriereinrichtung und eine Kühleinrichtung, wobei das herzustellende Rohr zumindest teilweise während des Herstellvorganges durch eine oder mehrere jeweils in einer Halterung (32, 50, 52) gelagerten Rolle (38, 56, 58) geführt ist,
**dadurch gekennzeichnet,**
**dass** Mittel (34, 54) vorgesehen sind, welche die Positionierung der Rolle oder der Rollen (38, 56, 58) in ihrer vertikalen Lage automatisch und abhängig vom Rohrdurchmesser der herzustellenden Rohre durchführen, und dass die Führung zumindest zum Teil aus einer Reihe von in Abzugsrichtung hintereinander angeordneten Rollen (38, 56, 58) besteht, welche zumindest zwei unterschiedliche Rollengeometrien aufweisen.

8. Rohrextrusionsanlage nach Anspruch 7,
**dadurch gekennzeichnet,**
**dass** die Mittel (34, 54) ausgebildet sind, um die Positionierung in Abhängigkeit von der Gewichtsbelastung der Rollen (38, 56, 58) durchzuführen.

9. Rohrextrusionsanlage nach einem der Ansprüche 7 oder 8 ,
**dadurch gekennzeichnet,**
**dass** eine Rolle (56) mit einer ersten Rollengeometrie verwendet ist, welche den maximal möglichen Rohrradius aufweist und eine Rolle (58) mit einer zweiten Geometrie verwendet ist, welche auch das kleinste herstellbare Rohr seitlich abstützt.

## Claims

1. Combined roll for guiding a pipe in a pipe extrusion installation (10) for producing pipes (40) with an adjustable diameter, comprising a roll (38, 56, 58) mounted in a holder (32, 50, 52),
**characterised in that**
means (34, 54) are provided which position the roll (38, 56, 58) in its vertical position both automatically and in accordance with the weight loading of the rolls (38, 56, 58).

2. Combined roll according to claim 1,
**characterised in that**
the roll (38, 56, 58) is mounted on an axle (36) which is supported moveably by means of an elastic element (34, 54) so that the roll (38, 56, 58) moves downwards as the load increases.

3. Combined roll according to claim 2,
**characterised in that**
a spring (34, 54) is provided as the elastic element, in particular a helical spring.

4. Combined roll according to claim 3,
**characterised in that**
the spring temper is adjusted to the metric weight range of the pipe associated with the dimension range.

5. Combined roll according to one of the preceding claims,
**characterised in that**
where there are several rolls arranged one after the other various different roll dimensions are used.

6. Combined roll according to claim 5,
**characterised in that**
the roll dimensions for supporting the pipe correspond to the maximum possible pipe radius or are configured so that even the smallest pipe produced is supported at the side or is designed in the form of a double prism.

7. Pipe extrusion installation for producing pipes with an adjustable diameter comprising an extruder, an adjustable calibrating device and a cooling device, whereby the pipe to be produced is guided at least partly during its manufacturing process by one or more rolls (38, 56, 58) each mounted in a holder (32, 50, 52),
**characterised in that**
means (34, 54) are provided which position the roll or the rolls (38, 56, 58) in a vertical position automatically and in accordance with the diameter of the pipes to be produced, and **in that** the guide consists at least partly of a series of rolls (38, 56, 58) arranged behind one another in draw-off position which have at least two different roll dimensions.

8. Pipe extrusion installation according to claim 7,
**characterised in that**
the means (34, 54) are designed to perform positioning according to the weight loading of the rolls (38, 56, 58).

9. Pipe extrusion installation according to one of claims 7 or 8,
**characterised in that**
a roll (56) with a first set of dimensions is used which has the maximum possible pipe radius and a roll (58) with a second set of dimensions is used which also supports the smallest produceable pipe at the side.

## Revendications

1. Rouleau combiné pour le guidage d'un tuyau dans une installation d'extrusion de tuyaux (10) pour la fabrication de tuyaux (40) de diamètre réglable, comprenant un rouleau (38, 56, 58) monté dans un support (32, 50, 52), **caractérisé en ce qu'**il est prévu des moyens (34, 54) qui effectuent le positionnement du rouleau (38, 56, 58) dans sa position verticale de manière automatique et en fonction de la charge pondérale du rouleau (38, 56, 58).

2. Rouleau combiné selon la revendication 1, **caractérisé en ce que** le rouleau (38, 56, 58) est monté sur un axe (36), qui est supporté de façon mobile au moyen d'un élément élastique (34, 54), de telle manière que le rouleau (38, 56, 58) se déplace vers le bas lorsque la charge augmente.

3. Rouleau combiné selon la revendication 2, **caractérisé en ce qu'**il est prévu un ressort (34, 54), en particulier un ressort hélicoïdal, comme élément élastique.

4. Rouleau combiné selon la revendication 3, **caractérisé en ce que** la dureté du ressort est accordée à la gamme de poids au mètre courant du tuyau, liée à la gamme des dimensions.

5. Rouleau combiné selon l'une quelconque des revendications précédentes, **caractérisé en ce que** l'on utilise différentes géométries de rouleau dans le cas de plusieurs rouleaux disposés l'un après l'autre.

6. Rouleau combiné selon la revendication 5, **caractérisé en ce que** la géométrie du rouleau correspond à un rayon de tuyau maximal possible pour soutenir le tuyau, ou est configurée de telle façon que même le plus petit tuyau à fabriquer soit soutenu latéralement, ou est réalisée sous la forme d'un double prisme.

7. Installation d'extrusion de tuyaux pour la fabrication de tuyaux de diamètre réglable, comprenant une extrudeuse, un dispositif de calibrage réglable et un dispositif de refroidissement, dans laquelle le tuyau à fabriquer est guidé au moins partiellement pendant l'opération de fabrication par un ou plusieurs rouleaux (38, 56, 58) montés dans un support (32, 50, 52), **caractérisée en ce qu'**il est prévu des moyens (34, 54) qui effectuent le positionnement du rouleau ou des rouleaux (38, 56, 58) en position verticale, de façon automatique et en fonction du diamètre de tuyau des tuyaux à fabriquer, et **en ce que** le guidage se compose au moins en partie d'une série de rouleaux (38, 56, 58) disposés l'un après l'autre dans la direction d'extraction, et qui présentent au moins deux géométries de rouleau différentes.

8. Installation d'extrusion de tuyaux selon la revendication 7, **caractérisée en ce que** les moyens (34, 54) sont configurés de façon à effectuer le positionnement en fonction de la charge pondérale des rouleaux (38, 56, 58).

9. Installation d'extrusion de tuyaux selon l'une des revendications 7 ou 8, **caractérisée en ce que** l'on utilise un rouleau (56) avec une première géométrie de rouleau, qui présente le rayon de tuyau maximal possible et on utilise un rouleau (58) avec une deuxième géométrie, qui soutient latéralement aussi le plus petit tuyau pouvant être fabriqué.
